# EUROPEAN PATENT SPECIFICATION

(11) **EP 4 549 712 B1**
(45) Date of publication and mention of the grant of the patent: **22.04.2026**
(21) Application number: 24210098.0
(22) Date of filing: 31.10.2024
(51) Int. Cl.: F02B 37/00, F02B 37/12, F02B 37/10, F02B 37/14, F02B 39/10

(54) **LEANING VEHICLE**
NEIGEFAHRZEUG
VÉHICULE INCLINABLE

(30) Priority: 31.10.2023 WO PCT/JP2023/039344
(43) Date of publication of application: 07.05.2025
(73) Proprietor: Yamaha Hatsudoki Kabushiki Kaisha, Iwata-shi, Shizuoka 438-8501 (JP)
(72) Inventor: MAKITA, Naoki, Iwata-shi, Shizuoka, 438-8501 (JP); TAKAHASHI, Toshihiko, Iwata-shi, Shizuoka, 438-8501 (JP); TORIGOSHI, Masaki, Iwata-shi, Shizuoka, 438-8501 (JP)
(74) Representative: Zimmermann, Tankred Klaus

(56) References cited:
- EP-A1- 3 943 731
- WO-A1-2008/079180
- CN-A- 105 649 758
- JP-A- 2015 094 232
- US-A1- 2008 121 218
- US-A1- 2012 247 857

## Description

### BACKGROUND OF THE INVENTION

The present teaching relates to a leaning vehicle on which an electrically assisted turbocharger is mounted.

WO 2020/217656 A1 discloses a known motorcycle including an engine and a turbocharger according to the preamble of claim 1. The turbocharger is driven by exhaust gas exhausted from the engine, and compresses intake air to supply a larger amount of air to the engine. It is therefore possible to obtain a large output and a high torque.

DE 10 2012 004 394 A1 discloses a known automobile on which an engine and an electrically assisted turbocharger including an electric motor are mounted. The electrically assisted turbocharger drives the turbocharger by the electric motor in addition to the exhaust gas exhausted from the engine. This makes it possible not only to obtain a large output and a high torque, but also to improve the response characteristic of the engine in response to an operation of an acceleration operator.

### SUMMARY OF THE INVENTION

An electrically assisted turbocharger may be mounted on a leaning vehicle such as a motorcycle. An electric motor included in the electrically assisted turbocharger is driven by electric energy that a motor generator generates by rotational force of the crankshaft of the engine. The electrically assisted turbocharger and the motor generator are electric components driven at a high voltage. Electric components driven at a high voltage tend to be large in size. An electrically assisted turbocharger high voltage harness connecting the electrically assisted turbocharger, the motor generator, and at least one controller configured to control the electrically assisted turbocharger and the motor generator tends to be long because it is thick and cannot be easily bent. In this regard, when the high voltage harness is long, the resistance of the high voltage harness itself is large. A leaning vehicle is smaller in size than an automobile. The leaning vehicle is provided with, for example, members such as a coolant water pipe, a fuel pipe, and a low voltage harness. On this account, the leaning vehicle tends to be restricted in the layout of the electrically assisted turbocharger. To provide a leaning vehicle on which an electrically assisted turbocharger is mounted, it is required to facilitate the routing of an electrically assisted turbocharger high voltage harness, while taking into account other harnesses and pipes. Furthermore, it has been required to improve the degree of freedom in designing the position in the vehicle up-down direction of a motor generator controller that controls a relatively large motor generator.

An object is to provide a leaning vehicle on which an electrically assisted turbocharger is mounted, which facilitates the routing of a thick electrically assisted turbocharger high voltage harness and improves the degree of freedom in designing the position of a motor generator controller in a vehicle up-down direction, while suppressing the electrically assisted turbocharger high voltage harness used at a high voltage from becoming long.

(1) A leaning vehicle of an embodiment of the present teaching has the following features.

The leaning vehicle on which an electrically assisted turbocharger is mounted includes: a vehicle body frame which leans in a vehicle rightward direction when turning right and leans in a vehicle leftward direction when turning left; an engine including a cylinder member forming at least one cylinder hole and a crankcase member accommodating a crankshaft rotating about an axial line extending in a vehicle left-right direction, the cylinder member being provided so that at least one cylinder axial line that is a central axial line of the at least one cylinder hole is in parallel to a vehicle up-down direction or intersects with the vehicle up-down direction; a motor generator which is configured to generate electric power by rotational force of the crankshaft; an electrically assisted turbocharger which includes a turbocharger and an electric motor, the turbocharger being configured to compress intake air supplied to the engine, by a compressor provided on the same rotational shaft as a turbine driven by exhaust gas exhausted from the engine, and the electric motor being configured to rotate the rotational shaft of the turbocharger by utilizing electric energy generated by the motor generator; at least one controller which is configured to control the motor generator and the electric motor rotating the rotational shaft of the electrically assisted turbocharger; and an electrically assisted turbocharger high voltage harness which connects the motor generator, the electric motor of the electrically assisted turbocharger, and the at least one controller so as to supply the electric energy from the motor generator to the electric motor of the electrically assisted turbocharger, the at least one controller including: a motor generator controller controlling at least the motor generator; and an electrically assisted turbocharger controller controlling the electric motor of the electrically assisted turbocharger and being integrated with or separated from the electrically assisted turbocharger, (i) in a vehicle side view, the electrically assisted turbocharger controller being provided forward of a front end face of the cylinder member in a vehicle front-rear direction so as to at least partially face the front end face of the cylinder member in the vehicle front-rear direction, and the motor generator controller being provided rearward of a rear end face of the cylinder member in the vehicle front-rear direction so as to at least partially face the rear end face of the cylinder member in the vehicle front-rear direction, and a part of the electrically assisted turbocharger high voltage harness which connects the electrically assisted turbocharger controller and the motor generator controller being at least partially provided in a space that is (a) above a lowermost end of the crankcase member in the vehicle up-down direction, (b) below an uppermost end of the cylinder member in the vehicle up-down direction, (c) inside the maximum width of the crankcase member in the vehicle left-right direction, and (d) outside the cylinder member in the vehicle left-right direction, or (ii) when viewed in the cylinder axial direction, the electrically assisted turbocharger being provided forward of the front end face of the cylinder member in the vehicle front-rear direction so as to at least partially face the front end face of the cylinder member in the vehicle front-rear direction, and the electrically assisted turbocharger controller being provided rearward of the rear end face of the cylinder member in the vehicle front-rear direction so as to at least partially face the rear end face of the cylinder member in the vehicle front-rear direction, and a part of the electrically assisted turbocharger high voltage harness which connects the electrically assisted turbocharger and the electrically assisted turbocharger controller being at least partially provided in a space that is (a) above the lowermost end of the crankcase member in the vehicle up-down direction, (b) below the uppermost end of the cylinder member in the vehicle up-down direction, (c) inside the maximum width of the crankcase member in the vehicle left-right direction, and (d) outside the cylinder member in the vehicle left-right direction.

According to this arrangement, the electrically assisted turbocharger controller is provided forward of the front end face of the cylinder member in the vehicle front-rear direction so as to at least partially face the front end face of the cylinder member in the vehicle front-rear direction, and the motor generator controller is provided rearward of the rear end face of the cylinder member in the vehicle front-rear direction so as to at least partially face the rear end face of the cylinder member in the vehicle front-rear direction. Due to this, the electrically assisted turbocharger controller and the motor generator controller are provided to be separated from each other in the vehicle front-rear direction of the cylinder member. Furthermore, the part of the electrically assisted turbocharger high voltage harness which connects the electrically assisted turbocharger controller and the motor generator controller is at least partially provided in the space that is (a) above the lowermost end of the crankcase member in the vehicle up-down direction, (b) below the uppermost end of the cylinder member in the vehicle up-down direction, (c) inside the maximum width of the crankcase member in the vehicle left-right direction, and (d) outside the cylinder member in the vehicle left-right direction. Alternatively, the electrically assisted turbocharger is provided forward of the front end face of the cylinder member in the vehicle front-rear direction so as to at least partially face the front end face of the cylinder member in the vehicle front-rear direction, and the electrically assisted turbocharger controller is provided rearward of the rear end face of the cylinder member in the vehicle front-rear direction so as to at least partially face the rear end face of the cylinder member in the vehicle front-rear direction. Due to this, the electrically assisted turbocharger and the electrically assisted turbocharger controller are provided to be separated from each other in the vehicle front-rear direction of the cylinder member. Furthermore, the part of the electrically assisted turbocharger high voltage harness, which connects the electrically assisted turbocharger and the electrically assisted turbocharger controller, is at least partially provided in the space that is (a) above the lowermost end of the crankcase member in the vehicle up-down direction, (b) below the uppermost end of the cylinder member in the vehicle up-down direction, (c) inside the maximum width of the crankcase member in the vehicle left-right direction, and (d) outside the cylinder member in the vehicle left-right direction. The leaning vehicle is arranged so that the length in the left-right direction is shorter than the length in the vehicle up-down direction and the length in the vehicle front-rear direction. Therefore, either the part of the electrically assisted turbocharger high voltage harness which connects the motor generator controller and the electrically assisted turbocharger controller or the part of the electrically assisted turbocharger high voltage harness which connects the electrically assisted turbocharger and the electrically assisted turbocharger controller is provided by utilizing the space around the cylinder member, which is formed by the difference in length in the vehicle left-right direction between the cylinder member and the crankcase member. On this account, the total length of the electrically assisted turbocharger high voltage harness is suppressed and the resistance of the electrically assisted turbocharger high voltage harness itself is reduced. Furthermore, because the electrically assisted turbocharger high voltage harness is routed along the vehicle front-rear direction by utilizing the space formed by utilizing the difference in length in the vehicle left-right direction between the cylinder member and the crankcase member, it is easy to route the electrically assisted turbocharger high voltage harness that is thick. In the case (i), the motor generator controller can be provided by utilizing the space extending in the vehicle up-down direction, which faces the rear end face of the cylinder member in the vehicle front-rear direction. On this account, the degree of freedom in designing the position of the motor generator controller in the vehicle up-down direction is high. In the case (ii), the motor generator controller can be provided by utilizing the space extending in the vehicle up-down direction, which is rearward of the cylinder member in the front-rear direction, or the space extending in the vehicle up-down direction, which is as high as the crankcase member in the vehicle up-down direction. On this account, the degree of freedom in designing the position of the motor generator controller in the vehicle up-down direction is high.

Because of the above, it is possible to provide a leaning vehicle on which an electrically assisted turbocharger is mounted, which facilitates the routing of a thick electrically assisted turbocharger high voltage harness and improves the degree of freedom in designing the position of a motor generator controller in a vehicle up-down direction, while suppressing the electrically assisted turbocharger high voltage harness used at a high voltage from becoming long.

(2) In addition to the arrangement (1) above, the leaning vehicle of the embodiment of the present teaching may be arranged as described below.

At least part of the motor generator controller is provided either rearward of or at the same position as the motor generator in the vehicle front-rear direction.

With this arrangement, the motor generator controller is provided rearward of or at the same position as the motor generator in the vehicle front-rear direction. It is therefore possible to provide a leaning vehicle on which an electrically assisted turbocharger is mounted, which improves the degree of freedom in designing the position of a motor generator controller in a vehicle up-down direction.

(3) In addition to the arrangement (1) or (2) above, the leaning vehicle of the embodiment of the present teaching may be arranged as described below.

An upper portion in the vehicle up-down direction of at least one cylinder axial line of the cylinder member is forward of a lower portion in the vehicle front-rear direction.

With this arrangement, because the cylinder member tilts in the vehicle forward direction, a space extending in the vehicle up-down direction tends to be formed rearward of the cylinder member. It is therefore possible to provide the motor generator controller by utilizing the space extending in the vehicle up-down direction and being rearward of the cylinder member, so as to improve the degree of freedom in designing the position of the motor generator controller in the vehicle up-down direction.

It is, however, noted that, when the leaning vehicle has the above-described arrangement (3), the motor generator controller may not be provided rearward of the cylinder member.

(4) In addition to any one of the arrangements (1) to (3) above, the leaning vehicle of the embodiment of the present teaching may be arranged as described below.

The electrically assisted turbocharger and the electrically assisted turbocharger controller are separated from each other, the electrically assisted turbocharger controller and the motor generator controller are integrated, when viewed in the cylinder axial direction, the electrically assisted turbocharger is provided forward of the cylinder member in the vehicle front-rear direction, and the electrically assisted turbocharger controller integrated with the motor generator controller is provided rearward of the cylinder member in the vehicle front-rear direction, and the part of the electrically assisted turbocharger high voltage harness, which connects the electrically assisted turbocharger and the electrically assisted turbocharger controller is at least partially provided in the space that is (a) above the lowermost end of the crankcase member in the vehicle up-down direction, (b) below the uppermost end of the cylinder member in the vehicle up-down direction, (c) inside the maximum width of the crankcase member in the vehicle left-right direction, and (d) outside the cylinder member in the vehicle left-right direction.

According to this arrangement, the electrically assisted turbocharger controller and the motor generator controller are integrated. Furthermore, the electrically assisted turbocharger which is separated from the electrically assisted turbocharger controller is provided forward of the cylinder member in the vehicle front-rear direction, and the electrically assisted turbocharger controller is provided rearward of the cylinder member in the vehicle front-rear direction. Due to this, the electrically assisted turbocharger and the electrically assisted turbocharger controller integrated with the motor generator controller are provided to be separated from each other in the vehicle front-rear direction of the cylinder member. Furthermore, the part of the electrically assisted turbocharger high voltage harness, which connects the electrically assisted turbocharger and the electrically assisted turbocharger controller, is at least partially provided in the space that is (a) above the lowermost end of the crankcase member in the vehicle up-down direction, (b) below the uppermost end of the cylinder member in the vehicle up-down direction, (c) inside the maximum width of the crankcase member in the vehicle left-right direction, and (d) outside the cylinder member in the vehicle left-right direction. The leaning vehicle is arranged so that the length in the left-right direction is shorter than the length in the vehicle up-down direction and the length in the vehicle front-rear direction. The part of the electrically assisted turbocharger high voltage harness, which connects the electrically assisted turbocharger integrated with the motor generator controller and the electrically assisted turbocharger controller, is provided by utilizing the space around the cylinder member, which is formed by the difference in length in the vehicle left-right direction between the cylinder member and the crankcase member. Furthermore, because the electrically assisted turbocharger controller and the motor generator controller are integrated, the electrically assisted turbocharger high voltage harness connecting the electrically assisted turbocharger controller and the motor generator controller is unnecessary. On this account, the total length of the electrically assisted turbocharger high voltage harness is suppressed and the resistance of the electrically assisted turbocharger high voltage harness itself is reduced. Furthermore, because the electrically assisted turbocharger high voltage harness is routed along the vehicle front-rear direction by utilizing the space formed by utilizing the difference in length in the vehicle left-right direction between the cylinder member and the crankcase member, it is easy to route the electrically assisted turbocharger high voltage harness that is thick. Furthermore, the motor generator controller which is integrated with the electrically assisted turbocharger controller can be provided by utilizing the space extending in the vehicle up-down direction, which is provided rearward of the cylinder member in the vehicle front-rear direction. It is therefore possible to improve the degree of freedom in designing the position of the motor generator controller in the vehicle up-down direction.

In the present teaching and embodiments, a vehicle up-down direction is a direction perpendicular to a horizontal plane when a leaning vehicle stands erect on the horizontal plane. A vehicle left-right direction is the left-right direction for the rider of the leaning vehicle. A vehicle front-rear direction is a direction orthogonal to the vehicle up-down direction and the vehicle left-right direction, and is a front-rear direction for the rider on the leaning vehicle. A vehicle forward direction is a direction in which the leaning vehicle travels straight.

In the present teaching and embodiments, when a vehicle body frame leans in the vehicle rightward direction, the vehicle body frame leans in the vehicle rightward direction relative to the vehicle up-down direction. To put it differently, the vehicle body frame leans in such a way that an upper portion is rightward of a lower portion in the vehicle left-right direction. The definition of leaning of the vehicle body frame leftward in the vehicle left-right direction is similar to this.

In the present teaching and embodiments, the engine may be a single-cylinder engine having one cylinder hole or a multi-cylinder engine having plural cylinder holes. The engine may be a parallel multi-cylinder engine having cylinder holes aligned in the vehicle left-right direction. The engine may be a V engine having a front cylinder member with at least one cylinder hole and a rear cylinder member provided rearward of the front cylinder member. The rear cylinder member may or may not be included in a cylinder member of the present teaching. In the present teaching and embodiments, the cylinder member includes a cylinder head member and a cylinder body member.

In the present teaching and embodiments, the cylinder hole forms a combustion chamber, with a piston and the cylinder head member, which are provided in the cylinder hole. When the cylinder member forms plural cylinder holes, the cylinder axial lines that are the central axial lines of the respective cylinder holes are in parallel to one another.

In the present teaching and embodiments, the cylinder axial line is not a line segment existing only in a region where a cylinder hole exists, but a linear line with infinite length.

In the present teaching and embodiments, the rotational axis of the crankshaft extends along the vehicle left-right direction. The rotational axis of the crankshaft may be in parallel to the vehicle left-right direction when the leaning vehicle stands erect.

In the present teaching and embodiments, the cylinder member is provided at least partially above a crankcase member in the vehicle up-down direction. In the present teaching and embodiments, the maximum width in the vehicle left-right direction of the crankcase member is larger than the maximum width in the vehicle left-right direction of the cylinder member. In other words, a space in the vehicle left-right direction is provided inside the maximum width of the crankcase member and outside the cylinder member.

In the present teaching and embodiments, the leaning vehicle may be, for example, a motorcycle or a motor tricycle having one or two front wheel(s). In the present teaching and embodiments, the leaning vehicle may or may not include an electric motor which is configured to generate a driving force transmitted to a driving wheel without the intervention of the crankshaft of the engine.

In the present teaching and embodiments, at least one controller includes a motor generator controller and an electrically assisted turbocharger controller. The motor generator controller is configured to control a power generation function and a powering function of a motor generator having a power generation state and a powering function. For example, the motor generator may be controlled by the motor generator controller to be in the power generation state as a generator, or to be in the powering state as a starter motor. The electrically assisted turbocharger controller is configured to control the torque and rotation speed of the electric motor included in the electrically assisted turbocharger.

In the present teaching and embodiments, at least one controller includes an electrically assisted turbocharger controller and a motor generator controller. **In** the present teaching and embodiments, the motor generator and the motor generator controller may be separated from each other or may be integrated. When the motor generator and the motor generator controller are integrated, the motor generator and the motor generator controller are provided on, for example, a side surface or an upper surface of the engine. In the present teaching and embodiments, the electrically assisted turbocharger and the electrically assisted turbocharger controller are integrated or are separated from each other. When the electrically assisted turbocharger and the electrically assisted turbocharger controller are integrated, the electrically assisted turbocharger controller is provided at any position above or below the electrically assisted turbocharger in the vehicle up-down direction, to the left of or to the right of the electrically assisted turbocharger in the vehicle left-right direction, or in front of or behind the electrically assisted turbocharger in the vehicle front-rear direction. In the present teaching and embodiments, the motor generator may be provided on a crankshaft or may be provided on a shaft that is in parallel to the crankshaft, but is different from the crankshaft. In the present teaching and embodiments, a capacitor may be connected between the motor generator controller and the electrically assisted turbocharger controller. In this case, at least part of electric energy generated by the motor generator may be stored in the capacitor. In the present teaching and embodiments, the electric motor in the electrically assisted turbocharger may have a power generation function. In this case, the motor generator may be driven by utilizing at least part of electric energy generated by the electric motor in the electrically assisted turbocharger. Furthermore, when a capacitor is connected between the motor generator controller and the electrically assisted turbocharger controller, at least part of electric energy generated by the electric motor in the electrically assisted turbocharger may be stored in the capacitor.

In the present teaching and embodiments, the electrically assisted turbocharger high voltage harness connects the motor generator and the electrically assisted turbocharger. To be more specific, the electrically assisted turbocharger high voltage harness includes a part connecting the motor generator controller and the electrically assisted turbocharger controller. Furthermore, in the present teaching and embodiments, the electrically assisted turbocharger high voltage harness includes a part connecting the motor generator and the motor generator controller when they are separated, and a part connecting the electrically assisted turbocharger and the electrically assisted turbocharger controller when they are separated. In the present embodiment, the electrically assisted turbocharger high voltage harness may have an orange exterior.

In the present teaching and embodiments, a statement "in a vehicle side view, at least part of the electrically assisted turbocharger controller is provided forward of a front end face of the cylinder member in the vehicle front-rear direction to face the front end face of the cylinder member" indicates that the electrically assisted turbocharger controller provided forward of the front end face of the cylinder member in the vehicle front-rear direction overlaps the front end face of the cylinder member when viewed in the vehicle front-rear direction. Furthermore, the statement encompasses an arrangement in which, in the vehicle front-rear direction, the electrically assisted turbocharger controller is provided forward of the rearmost end of the front end face of the cylinder member in the vehicle front-rear direction and rearward of the frontmost end of the cylinder member. In the present teaching and embodiments, a statement "in a vehicle side view, at least part of the motor generator controller is provided rearward of the rear end face of the cylinder member in the vehicle front-rear direction to face the rear end face of the cylinder member" indicates that the motor generator controller provided rearward of the rear end face of the cylinder member in the vehicle front-rear direction overlaps the rear end face of the cylinder member when viewed in the vehicle front-rear direction. Furthermore, the statement encompasses an arrangement in which, in the vehicle front-rear direction, the motor generator controller is provided rearward of the frontmost end of the rear end face of the cylinder member in the vehicle front-rear direction and forward of the rearmost end of the cylinder member. The front end face of the cylinder member is a surface from the lower end of the cylinder body member connected to the crankcase member in the vehicle forward direction to the upper end of the cylinder head member in the vehicle forward direction, in a vehicle side view. Likewise, the rear end face of the cylinder member is a surface from the lower end of the cylinder body member connected to the crankcase member in the vehicle rearward direction to the upper end of the cylinder head member in the vehicle rearward direction, in a vehicle side view. Each of the front end face and the rear end face of the cylinder member may not be a flat plane but a curved face, or may be formed by plural continuous faces. In the present teaching and embodiments, a statement "an upper portion in the vehicle up-down direction of at least one cylinder axial line is forward of a lower portion in the vehicle front-rear direction" indicates that, when at least one cylinder axial line is divided into an upper portion and a lower portion by a flat plane orthogonal to the vehicle up-down direction, the upper portion of the at least one cylinder axial line is forward in the vehicle front-rear direction of the lower portion of the at least one cylinder axial line.

In the present teaching and embodiments, terms "including", "comprising", "having", and derivatives thereof are used to encompass not only listed items and equivalents thereof, but also additional items.

In the present teaching and embodiments, the terms "mounted", "connected", "coupled", and "supported" are used in broad sense. Specifically, not only direct attachment, connection, coupling, and support, but also indirect attachment, connection, coupling, and support are included. Further, connected and coupled are not limited to physical or mechanical connections and couplings. They also include direct or indirect electrical connections and couplings.

Unless otherwise defined, all terms (technical and scientific terms) used in this description and claims indicate meanings typically understood by a person with ordinary skill in the art in the technical field to which the present teaching belongs. Terms such as those defined in commonly used dictionaries are to be interpreted as having meaning that is consistent with their meaning in the context of the relevant art and the present disclosure, and are not to be interpreted in an idealized or excessively formal sense.

In this description, the term "may" is non-exclusive. "May be" means "may be but not limited to". In the present specification, "may" implicitly encompasses "do not".

Before describing embodiments of the present teaching in detail, it is to be understood that the present teaching is not limited to the details of construction and arrangement of the constituent features set forth in the following description or illustrated in the drawings. The present teaching is also applicable to embodiments other than the embodiments described later. The present teaching may be implemented as embodiments with various modifications to the embodiments described below. Furthermore, the present teaching may be implemented by suitably combining below-described embodiments and modifications.

With a leaning vehicle of the present teaching on which an electrically assisted turbocharger is mounted, it is possible to facilitate the routing of a thick electrically assisted turbocharger high voltage harness used at a high voltage and to improve the degree of freedom in designing the position of a motor generator controller in a vehicle up-down direction, while suppressing the electrically assisted turbocharger high voltage harness from becoming long.

### BRIEF DESCRIPTION OF THE DRAWINGS

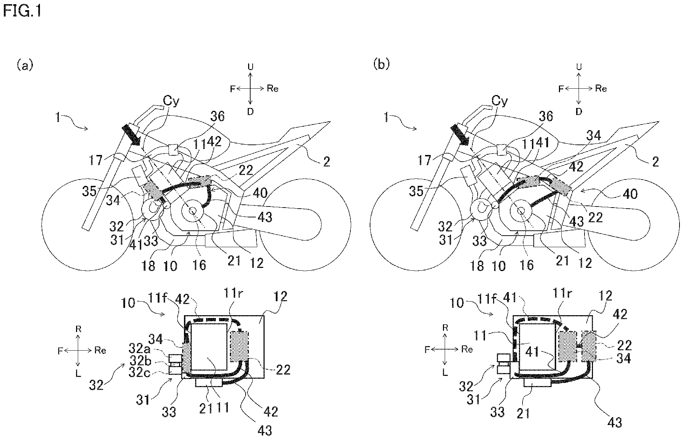

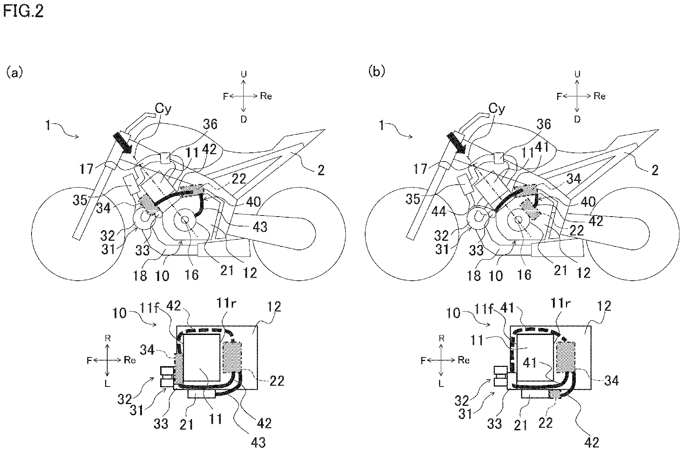

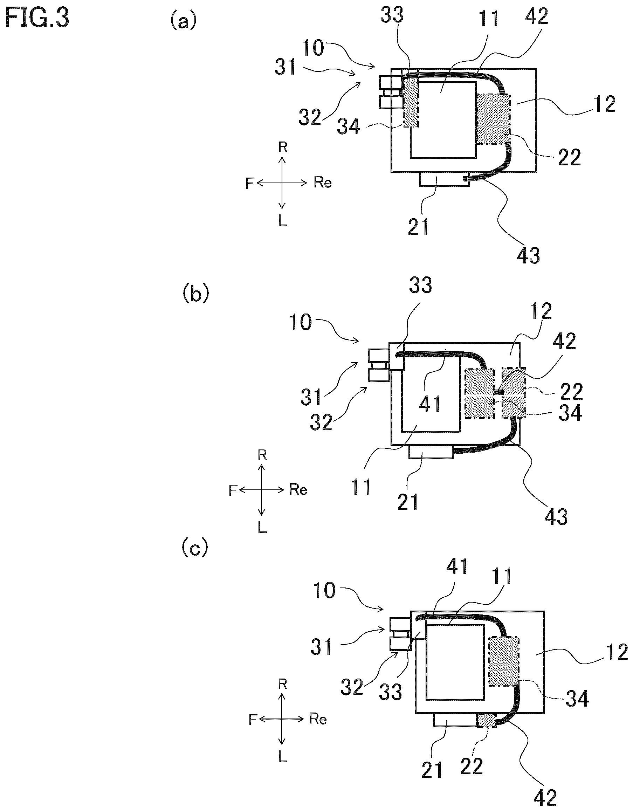

Each of FIGs. 1(a) and 1(b) is a schematic diagram showing an example of a leaning vehicle of an embodiment of the present teaching. FIG. 1(a) is a schematic diagram showing a leaning vehicle of the First Embodiment. FIG. 1(b) is a schematic diagram showing a leaning vehicle of the Second Embodiment.
Each of FIGs. 2(a) and 2(b) is a schematic diagram showing a modification of a leaning vehicle of an embodiment of the present teaching. FIG. 2(a) is a schematic diagram showing a modification of the leaning vehicle of the First Embodiment. FIG. 2(b) is a schematic diagram showing a modification of the leaning vehicle of the Second Embodiment.
Each of FIGs. 3(a) and 3(b) is a schematic diagram showing a modification of a leaning vehicle of an embodiment of the present teaching. FIG. 3(a) is a schematic representation of an engine of a leaning vehicle of a modification of the First Embodiment, which is viewed in a cylinder axial direction. Each of FIG. 3(b) and FIG. 3(c) is a schematic representation of an engine of a leaning vehicle of a modification of the Second Embodiment, which is viewed in a cylinder axial direction.

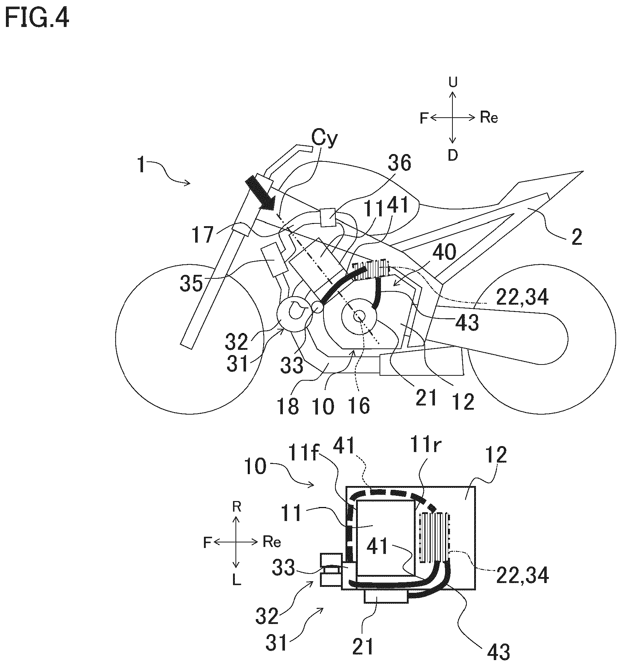

FIG. 4 is a schematic diagram showing a modification of the leaning vehicle of the Second Embodiment of the present teaching.

### DESCRIPTION OF THE PREFERRED EMBODIMENTS

In FIG. 1 to FIG. 4, arrows F, Re, U, D, L, and R indicate a vehicle forward direction, a vehicle rearward direction, a vehicle upward direction, a vehicle downward direction, a vehicle leftward direction, and a vehicle rightward direction, respectively.

The following will describe a leaning vehicle 1 of an embodiment of the present teaching with reference to FIG. 1 to FIG. 4. As examples of the embodiment of the leaning vehicle, FIG. 1(a) and FIG. 1(b) show two embodiments, respectively. FIG. 1 shows a leaning vehicle 1 of First Embodiment and a leaning vehicle 1 of Second Embodiment, which are in a stopped state. The upper figure in FIG. 1(a) is a schematic representation of a side face of the leaning vehicle 1 of First Embodiment. The lower figure in FIG. 1(a) is a schematic representation of an engine 10 of the leaning vehicle 1 of the First Embodiment, which is viewed in a cylinder axial direction. The upper figure in FIG. 1(b) is a schematic representation of a side face of the leaning vehicle 1 of the Second Embodiment. The lower figure in FIG. 1(b) is a schematic representation of an engine 10 of the leaning vehicle 1 of Second Embodiment, which is viewed in a cylinder axial direction.

The leaning vehicle 1 includes a vehicle body frame 2. The vehicle body frame 2 leans in the vehicle rightward direction when turning right and leans in the vehicle leftward direction when turning left. The leaning vehicle 1 includes an engine 10. The engine 10 includes a cylinder member 11 and a crankcase member 12. The cylinder member 11 forms at least one unillustrated cylinder hole. The center line of the at least one cylinder hole is referred to as at least one cylinder axial line Cy. The cylinder member 11 is routed so that the at least one cylinder axial line Cy is in parallel to the vehicle up-down direction or intersects with the vehicle up-down direction. The crankcase member 12 includes a crankshaft 16 that is configured to rotate about an axis extending along the vehicle left-right direction. The at least one cylinder hole of the cylinder member 11 has at least one unillustrated combustion chamber. The at least one combustion chamber is connected to an intake path 17 and an exhaust path 18. In the intake path 17, air supplied to the at least one combustion chamber flows. The intake path 17 is formed by members such as an intake pipe. In the exhaust path 18, exhaust gas exhausted from the at least one combustion chamber flows. The exhaust path 18 is formed by members such as an exhaust pipe. The leaning vehicle 1 includes various unillustrated pipes and wires in addition to pipes forming parts of the intake path 17 and the exhaust path 18.

The leaning vehicle 1 includes a motor generator 21 and a motor generator controller 22. The motor generator 21 is configured to be able to generate power by the rotational force of the crankshaft 16. In the example shown in FIG. 1, the motor generator 21 is provided on the crankshaft 16. The motor generator 21 may be provided on a shaft that is in parallel to the crankshaft 16 and is different from the crankshaft 16, so as to be able to transmit power. The motor generator controller 22 is configured to control the motor generator 21. The motor generator controller 22 is integrated with or separated from the motor generator 21. The motor generator controller 22 is one of at least one controller which is configured to control the motor generator 21 and an electric motor 33 rotating a rotational shaft 32b of a later-described electrically assisted turbocharger 31.

The leaning vehicle 1 includes an electrically assisted turbocharger 31 and an electrically assisted turbocharger controller 34. The electrically assisted turbocharger 31 includes a turbocharger 32 and an electric motor 33. The intake path 17 is formed partially inside the turbocharger 32. The exhaust path 18 is formed partially inside the turbocharger 32. The turbocharger 32 is configured to compress intake air supplied to the engine 10, by means of a compressor 32c that is provided on the same rotational shaft 32b as a turbine 32a driven by the exhaust gas exhausted from the engine 10. In the intake path 17, an intercooler 35 is provided to cool the air pressurized by the turbocharger 32. In the intake path 17, a throttle valve 36 is provided to adjust an amount of air supplied to the at least one combustion chamber. The electric motor 33 is configured to be able to rotate the rotational shaft 32b of the turbocharger 32 by utilizing electric energy generated by the motor generator 21. The electrically assisted turbocharger controller 34 is configured to control the electric motor 33 of the electrically assisted turbocharger 31. The electrically assisted turbocharger controller 34 is integrated with or separated from the electrically assisted turbocharger 31. The electrically assisted turbocharger controller 34 is one of at least one controller which is configured to control the motor generator 21 and the electric motor 33 rotating the rotational shaft 32b of the electrically assisted turbocharger 31 described later.

The leaning vehicle 1 includes an electrically assisted turbocharger high voltage harness 40. The electrically assisted turbocharger high voltage harness 40 connects the motor generator 21, the electric motor 33 of the electrically assisted turbocharger 31, and the motor generator controller 22 and the electrically assisted turbocharger controller 34, which are the at least one controller. The electrically assisted turbocharger high voltage harness 40 supplies electric energy from the motor generator 21 to the electric motor 33 of the electrically assisted turbocharger 31. The electrically assisted turbocharger high voltage harness 40 includes a part 42 which connects the electrically assisted turbocharger controller 34 and the motor generator controller 22. Furthermore, the electrically assisted turbocharger high voltage harness 40 includes a part 41 which connects the electrically assisted turbocharger 31 and the electrically assisted turbocharger controller 34 when the electrically assisted turbocharger 31 and the electrically assisted turbocharger controller 34 are separated from each other. Furthermore, the electrically assisted turbocharger high voltage harness 40 includes a part 43 which connects the motor generator 21 and the motor generator controller 22 when the motor generator 21 and the motor generator controller 22 are separated from each other. In the example shown in FIG. 1, the motor generator 21 and the motor generator controller 22 are separated from each other. In the example shown in FIG. 1, the electrically assisted turbocharger 31 and the electrically assisted turbocharger controller 34 are separated from each other.

The electrically assisted turbocharger high voltage harness 40 includes a part 41 which connects the electrically assisted turbocharger 31 and the electrically assisted turbocharger controller 34. The electrically assisted turbocharger high voltage harness 40 includes a part 42 which connects the electrically assisted turbocharger controller 34 and the motor generator controller 22. The electrically assisted turbocharger high voltage harness 40 includes a part 43 which connects the motor generator 21 and the motor generator controller 22. The motor generator 21, the motor generator controller 22, the electrically assisted turbocharger 31, the electrically assisted turbocharger controller 34, and the electrically assisted turbocharger high voltage harness 40 are arranged as in the leaning vehicle 1 of the First Embodiment shown in FIG. 1(a) or the leaning vehicle 1 of the Second Embodiment shown in FIG. 1(b).

As shown in the upper figure in FIG. 1(a), in the leaning vehicle 1 of the First Embodiment, the electrically assisted turbocharger controller 34 is provided forward of a front end face 11f of the cylinder member 11 in the vehicle front-rear direction so as to at least partially face the front end face 11f of the cylinder member 11 in the vehicle front-rear direction, in a vehicle side view. Furthermore, the motor generator controller 22 is provided rearward of a rear end face 11r of the cylinder member 11 in the vehicle front-rear direction so as to at least partially face the rear end face 11r of the cylinder member 11 in the vehicle front-rear direction, in the vehicle side view. As shown in the lower figure in FIG. 1(a), the part 42 of the electrically assisted turbocharger high voltage harness 40, which connects the electrically assisted turbocharger controller 34 and the motor generator controller 22 is at least partially provided in a space that is (i) above the lowermost end of the crankcase member 12 in the vehicle up-down direction, (ii) below the uppermost end of the cylinder member 11 in the vehicle up-down direction, (iii) inside the maximum width of the crankcase member 12 in the vehicle left-right direction, and (iv) outside the cylinder member 11 in the vehicle left-right direction.

As shown in the upper figure in FIG. 1(b), in the leaning vehicle 1 of Second Embodiment, the electrically assisted turbocharger 31 is provided forward of a front end face 11f of the cylinder member 11 in the vehicle front-rear direction so as to at least partially face the front end face 11f of the cylinder member 11 in the vehicle front-rear direction, in a vehicle side view. Furthermore, the electrically assisted turbocharger controller 34 is provided rearward of the rear end face 11r of the cylinder member 11 in the vehicle front-rear direction so as to at least partially face the rear end face 11r of the cylinder member 11 in the vehicle front-rear direction, in the vehicle side view. As shown in the lower figure in FIG. 1(b), the part 41 of the electrically assisted turbocharger high voltage harness 40, which connects the electrically assisted turbocharger 31 and the electrically assisted turbocharger controller 34, is at least partially provided in a space that is (i) above the lowermost end of the crankcase member 12 in the vehicle up-down direction, (ii) below the uppermost end of the cylinder member 11 in the vehicle up-down direction, (iii) inside the maximum width of the crankcase member 12 in the vehicle left-right direction, and (iv) outside the cylinder member 11 in the vehicle left-right direction.

As shown in the upper figure in FIG. 1(a) and the upper figure in FIG. 1(b), at least part of the motor generator controller 22 is provided rearward of or at the same position as the motor generator 21 in the vehicle front-rear direction.

As in the leaning vehicle 1 of the First Embodiment and the leaning vehicle 1 of the Second Embodiment shown in FIG. 1, an upper portion in the vehicle up-down direction of the at least one cylinder axial line Cy of the cylinder member 11 is forward of a lower portion in the vehicle front-rear direction.

In the example of the leaning vehicle 1 of the First Embodiment shown in FIG. 1(a), the electrically assisted turbocharger 31 and the electrically assisted turbocharger controller 34 are separated from each other. Alternatively, as indicated in FIG. 2(a) showing a modification of the leaning vehicle 1 of the First Embodiment, the electrically assisted turbocharger 31 and the electrically assisted turbocharger controller 34 may be integrated. FIG. 2(a) is a schematic diagram showing a modification of the leaning vehicle 1 of the First Embodiment. The upper figure in FIG. 2(a) is a schematic representation of a side face of the leaning vehicle 1 of a modification of the First Embodiment. The lower figure in FIG. 2(a) is a schematic representation of an engine 10 of a leaning vehicle 1 of a modification of the First Embodiment, which is viewed in a cylinder axial direction. FIG. 2(a) shows a modification of the leaning vehicle 1 of the First Embodiment. As shown in the upper figure in FIG. 2(a), the electrically assisted turbocharger controller 34 is provided forward of the front end face 11f of the cylinder member 11 in the vehicle front-rear direction so as to at least partially face the front end face 11f of the cylinder member 11 in the vehicle front-rear direction, in a vehicle side view. Furthermore, the motor generator controller 22 is provided rearward of the rear end face 11r of the cylinder member 11 in the vehicle front-rear direction so as to at least partially face the rear end face 11r of the cylinder member 11 in the vehicle front-rear direction, in the vehicle side view. As shown in the lower figure in FIG. 2(a), the part 42 of the electrically assisted turbocharger high voltage harness 40, which connects the electrically assisted turbocharger controller 34 and the motor generator controller 22 is at least partially provided in a space that is (i) above the lowermost end of the crankcase member 12 in the vehicle up-down direction, (ii) below the uppermost end of the cylinder member 11 in the vehicle up-down direction, (iii) inside the maximum width of the crankcase member 12 in the vehicle left-right direction, and (iv) outside the cylinder member 11 in the vehicle left-right direction.

In the example of the leaning vehicle 1 of the Second Embodiment shown in FIG. 1(b), the motor generator 21 and the motor generator controller 22 are separated from each other. Alternatively, as shown in FIG. 2(b) indicating a modification of the leaning vehicle 1 of the Second Embodiment, the motor generator 21 and the motor generator controller 22 may be integrated. FIG. 2(b) is a schematic diagram showing another modification of the leaning vehicle 1 of the Second Embodiment. The upper figure in FIG. 2(b) is a schematic representation of a side face of the leaning vehicle 1 of another modification of the Second Embodiment. The lower figure in FIG. 2(b) is a schematic representation of an engine 10 of a leaning vehicle 1 of another modification of the Second Embodiment, which is viewed in a cylinder axial direction. FIG. 2(b) shows a modification of the leaning vehicle 1 of the Second Embodiment. As shown in the upper figure in FIG. 2(b), the electrically assisted turbocharger 31 is provided forward of the front end face 11f of the cylinder member 11 in the vehicle front-rear direction so as to at least partially face the front end face 11f of the cylinder member 11 in the vehicle front-rear direction, in a vehicle side view. Furthermore, the electrically assisted turbocharger controller 34 is provided rearward of the rear end face 11r of the cylinder member 11 in the vehicle front-rear direction so as to at least partially face the rear end face 11r of the cylinder member 11 in the vehicle front-rear direction, in the vehicle side view. As shown in the lower figure in FIG. 2(b), the part 41 of the electrically assisted turbocharger high voltage harness 40, which connects the electrically assisted turbocharger 31 and the electrically assisted turbocharger controller 34 is at least partially provided in a space that is (i) above the lowermost end of the crankcase member 12 in the vehicle up-down direction, (ii) below the uppermost end of the cylinder member 11 in the vehicle up-down direction, (iii) inside the maximum width of the crankcase member 12 in the vehicle left-right direction, and (iv) outside the cylinder member 11 in the vehicle left-right direction.

In the example shown in FIG. 1, the motor generator controller 22 is provided at the center in the vehicle left-right direction of the leaning vehicle 1. The motor generator controller 22 may be provided in a vehicle left portion or a vehicle right portion. In the example of the leaning vehicle 1 of the First Embodiment shown in FIG. 1(a), the electrically assisted turbocharger controller 34 is mostly provided in the vehicle left portion of the leaning vehicle 1. In the leaning vehicle 1 of the First Embodiment shown in FIG. 1(a), the electrically assisted turbocharger controller 34 may be mostly provided in a vehicle right portion of the leaning vehicle 1 as shown in the example in FIG. 3(a). In the example of the leaning vehicle 1 of the Second Embodiment shown in FIG. 1(b), the electrically assisted turbocharger controller 34 is mostly provided at the center in the vehicle left-right direction of the leaning vehicle 1. In the leaning vehicle 1 of the Second Embodiment shown in FIG. 1(b), the electrically assisted turbocharger controller 34 may be provided in the vehicle left portion or the vehicle right portion.

In the example shown in FIG. 1, the motor generator 21 and the electric motor 33 of the electrically assisted turbocharger 31 are provided in the vehicle left portion. Alternatively, as shown in examples shown in FIG. 3(a) to FIG. 3(c), the motor generator 21 may be provided in the vehicle left portion and the electric motor 33 of the electrically assisted turbocharger 31 may be provided in the vehicle right portion. The motor generator 21 may be provided in the vehicle right portion, and the electric motor 33 of the electrically assisted turbocharger 31 may be provided in the vehicle left portion. FIG. 3(a) is a schematic representation of the engine 10 of the leaning vehicle 1 of the modification of the First Embodiment shown in FIG. 1(a), which is viewed in a cylinder axial direction. FIG. 3(b) is a schematic representation of the engine 10 of the leaning vehicle 1 of the modification of the Second Embodiment shown in FIG. 1(b), which is viewed in a cylinder axial direction. FIG. 3(c) is a schematic representation of the engine 10 of the leaning vehicle 1 of the modification of the Second Embodiment shown in FIG. 1(b), which is viewed in a cylinder axial direction.

In the example of the leaning vehicle 1 of the Second Embodiment shown in FIG. 1(b), the electrically assisted turbocharger controller 34 and the motor generator controller 22 are separated from each other. Alternatively, as shown in an example in FIG. 4, the electrically assisted turbocharger controller 34 and the motor generator controller 22 may be integrated. FIG. 4 is a schematic representation showing a modification of the leaning vehicle 1 of the Second Embodiment. The upper figure in FIG. 4 is a schematic representation of a side face of the leaning vehicle 1 of a modification of the Second Embodiment. The lower figure in FIG. 4 is a schematic representation of the engine 10 of the leaning vehicle 1 of a modification of the Second Embodiment, which is viewed in a cylinder axial direction.

As shown in FIG. 4, the electrically assisted turbocharger 31 and the electrically assisted turbocharger controller 34 are separated from each other. Furthermore, the motor generator 21 and the motor generator controller 22 are separated from each other. The electrically assisted turbocharger controller 34 and the motor generator controller 22 are integrated.

As shown in the upper figure in FIG. 4, the electrically assisted turbocharger 31 is provided forward of the front end face 11f of the cylinder member 11 in the vehicle front-rear direction so as to at least partially face the front end face 11f of the cylinder member 11 in the vehicle front-rear direction, in a vehicle side view. Furthermore, the electrically assisted turbocharger controller 34 integrated with the motor generator controller 22 is provided rearward of the rear end face 11r of the cylinder member 11 in the vehicle front-rear direction so as to at least partially face the rear end face 11r of the cylinder member 11 in the vehicle front-rear direction, in the vehicle side view. As shown in the lower figure in FIG. 4, the part 41 of the electrically assisted turbocharger high voltage harness 40, which connects the electrically assisted turbocharger 31 and the electrically assisted turbocharger controller 34, is at least partially provided in a space that is (i) above the lowermost end of the crankcase member 12 in the vehicle up-down direction, (ii) below the uppermost end of the cylinder member 11 in the vehicle up-down direction, (iii) inside the maximum width of the crankcase member 12 in the vehicle left-right direction, and (iv) outside the cylinder member 11 in the vehicle left-right direction.

In the First Embodiment, as indicated by solid lines in the lower figures in FIG. 1(a) and FIG. 2(a), the part 42 of the electrically assisted turbocharger high voltage harness 40 connecting the electrically assisted turbocharger controller 34 and the motor generator controller 22 may be provided to pass a position to the left of the cylinder member 11 in the vehicle left-right direction. Alternatively, as indicated by broken lines in the lower figures in FIG. 1(a) and FIG. 2(a), the part 42 of the electrically assisted turbocharger high voltage harness 40 connecting the electrically assisted turbocharger controller 34 and the motor generator controller 22 may be provided to pass a position to the right of the cylinder member 11 in the vehicle left-right direction.

In the First Embodiment and the Second Embodiment, as indicated by solid lines in the lower figures in FIG. 1(b), FIG. 2(b), and FIG. 4, the part 41 of the electrically assisted turbocharger high voltage harness 40 connecting the electrically assisted turbocharger 31 and the electrically assisted turbocharger controller 34 may be provided to pass a position to the left of the cylinder member 11 in the vehicle left-right direction. Alternatively, as indicated by broken lines in the lower figures in FIG. 1(b), FIG. 2(b), and FIG. 4, the part 41 of the electrically assisted turbocharger high voltage harness 40 connecting the electrically assisted turbocharger 31 and the electrically assisted turbocharger controller 34 may be provided to pass a position to the right of the cylinder member 11 in the vehicle left-right direction.

In the leaning vehicle 1 of each of the First Embodiment, Second Embodiment, and the modifications, the rotational shaft of the electric motor 33 of the electrically assisted turbocharger 31 is provided on a shaft that is in parallel to the rotational shaft 32b of the turbocharger 32, but is different from the rotational shaft 32b of the turbocharger 32. Furthermore, in the leaning vehicle 1 of each of the First Embodiment, Second Embodiment, and the modifications, the rotational shaft of the electric motor 33 of the electrically assisted turbocharger 31 may be provided on the rotational shaft 32b of the turbocharger 32.

## Claims

1. A leaning vehicle (1) on which an electrically assisted turbocharger (31) is mounted, comprising:
a vehicle body frame (2) which leans in a vehicle rightward direction when turning right and leans in a vehicle leftward direction when turning left;
an engine (10) including a cylinder member (11) forming at least one cylinder hole and a crankcase member (12) accommodating a crankshaft (16) rotating about an axial line extending in a vehicle left-right direction, the cylinder member (11) being provided so that at least one cylinder axial line (Cy) that is a central axial line of the at least one cylinder hole is in parallel to a vehicle up-down direction or intersects with the vehicle up-down direction;
a motor generator (21) which is configured to generate electric power by rotational force of the crankshaft (16);
an electrically assisted turbocharger (31) which includes a turbocharger (32) and an electric motor (33), the turbocharger (32) being configured to compress intake air supplied to the engine (10), by a compressor (32c) provided on the same rotational shaft (32b) as a turbine (32a) driven by exhaust gas exhausted from the engine (10), and the electric motor (33) being configured to rotate the rotational shaft (32b) of the turbocharger (32) by utilizing electric energy generated by the motor generator (21);
at least one controller which is configured to control the motor generator (21) and the electric motor (33) rotating the rotational shaft (32b) of the electrically assisted turbocharger (31); and
an electrically assisted turbocharger high voltage harness (40) which connects the motor generator (21), the electric motor (33) of the electrically assisted turbocharger (31), and the at least one controller so as to supply the electric energy from the motor generator (21) to the electric motor (33) of the electrically assisted turbocharger (31),
**characterized in that** the at least one controller includes:
a motor generator controller (22) controlling at least the motor generator (21); and an electrically assisted turbocharger controller (34) controlling the electric motor (33) of the electrically assisted turbocharger (32) and being integrated with or separated from the electrically assisted turbocharger (31),
(i) in a vehicle side view, the electrically assisted turbocharger controller (34) being provided forward of a front end face (11f) of the cylinder member (11) in a vehicle front-rear direction so as to at least partially face the front end face (11f) of the cylinder member (11) in the vehicle front-rear direction, and the motor generator controller (22) being provided rearward of a rear end face (11r) of the cylinder member (11) in the vehicle front-rear direction so as to at least partially face the rear end face (11r) of the cylinder member (11) in the vehicle front-rear direction, and
a part (42) of the electrically assisted turbocharger high voltage harness (40), which connects the electrically assisted turbocharger controller (34) and the motor generator controller (22) being at least partially provided in a space that is (a) above a lowermost end of the crankcase member (12) in the vehicle up-down direction, (b) below an uppermost end of the cylinder member (11) in the vehicle up-down direction, (c) inside the maximum width of the crankcase member (12) in the vehicle left-right direction, and (d) outside the cylinder member (11) in the vehicle left-right direction, or
(ii) when viewed in the cylinder axial direction, the electrically assisted turbocharger (31) being provided forward of the front end face (11f) of the cylinder member (11) in the vehicle front-rear direction so as to at least partially face the front end face (11f) of the cylinder member (11) in the vehicle front-rear direction, and the electrically assisted turbocharger controller (34) being provided rearward of the rear end face (11r) of the cylinder member (11) in the vehicle front-rear direction so as to at least partially face the rear end face (11r) of the cylinder member (11) in the vehicle front-rear direction, and
a part (41) of the electrically assisted turbocharger high voltage harness (40), which connects the electrically assisted turbocharger (31) and the electrically assisted turbocharger controller (34) being at least partially provided in a space that is (a) above the lowermost end of the crankcase member (12) in the vehicle up-down direction, (b) below the uppermost end of the cylinder member (11) in the vehicle up-down direction, (c) inside the maximum width of the crankcase member (12) in the vehicle left-right direction, and (d) outside the cylinder member (11) in the vehicle left-right direction.

2. The leaning vehicle (1) according to claim 1, wherein, at least part of the motor generator controller (22) is provided rearward of or at the same position as the motor generator (21) in the vehicle front-rear direction.

3. The leaning vehicle (1) according to claim 1 or 2, wherein, an upper portion in the vehicle up-down direction of at least one cylinder axial line (Cy) of the cylinder member (11) is forward of a lower portion in the vehicle front-rear direction.

4. The leaning vehicle (1) according to any one of claims 1 to 3, wherein,
the electrically assisted turbocharger (31) and the electrically assisted turbocharger controller (34) are separated from each other,
the electrically assisted turbocharger controller (34) and the motor generator controller (22) are integrated,
when viewed in the cylinder axial direction, the electrically assisted turbocharger (31) is provided forward of the cylinder member (11) in the vehicle front-rear direction, and the electrically assisted turbocharger controller (34) integrated with the motor generator controller (22) is provided rearward of the cylinder member (11) in the vehicle front-rear direction, and
the part of the electrically assisted turbocharger high voltage harness (40), which connects the electrically assisted turbocharger (31) and the electrically assisted turbocharger controller (34) is at least partially provided in the space that is (a) above the lowermost end of the crankcase member (12) in the vehicle up-down direction, (b) below the uppermost end of the cylinder member (11) in the vehicle up-down direction, (c) inside the maximum width of the crankcase member (12) in the vehicle left-right direction, and (d) outside the cylinder member (11) in the vehicle left-right direction.

## Patentansprüche

1. Ein Neigungsfahrzeug (1), an dem ein elektrisch unterstützter Turbolader (31) befestigt ist, das folgende Merkmale aufweist:
einen Fahrzeugkörperrahmen (2), der sich beim Rechtsabbiegen in einer Fahrzeugrechtsrichtung neigt, und sich beim Linksabbiegen in einer Fahrzeuglinksrichtung neigt;
einen Motor (10), der ein Zylinderbauglied (11), das zumindest ein Zylinderloch bildet, und ein Kurbelgehäusebauglied (12) umfasst, das eine Kurbelwelle (16) aufnimmt, die sich um eine Achslinie dreht, die sich in einer Fahrzeug-Links-Rechts-Richtung erstreckt, wobei das Zylinderbauglied (11) so vorgesehen ist, dass zumindestens eine Zylinderaxiallinie (Cy), die eine zentrale Axiallinie des zumindest einen Zylinderlochs ist, parallel zu einer Fahrzeug-Oben-Unten-Richtung ist oder die Fahrzeug-Oben-Unten-Richtung schneidet;
einen Motorgenerator (21), der dazu konfiguriert ist, durch eine Drehkraft der Kurbelwelle (16) elektrische Leistung zu erzeugen;
einen elektrisch unterstützten Turbolader (31), der einen Turbolader (32) und einen Elektromotor (33) umfasst, wobei der Turbolader (32) dazu konfiguriert ist, Ansaugluft, die dem Motor (10) zugeführt wird, durch einen Kompressor (32c) zu komprimieren, der auf derselben Drehwelle (32b) wie eine Turbine (32a) vorgesehen ist, die durch Abgas angetrieben wird, das von dem Motor (10) ausgestoßen wird, und wobei der Elektromotor (33) dazu konfiguriert ist, die Drehwelle (32b) des Turboladers (32) unter Verwendung von elektrischer Energie zu drehen, die durch den Motorgenerator (21) erzeugt wird;
zumindest eine Steuerung, die dazu konfiguriert ist, den Motorgenerator (21) und den Elektromotor (33), der die Drehwelle (32b) des elektrisch unterstützten Turboladers (31) dreht, zu steuern; und
einen Hochspannungskabelbaum (40) des elektrisch unterstützten Turboladers, der den Motorgenerator (21), den Elektromotor (33) des elektrisch unterstützten Turboladers (31) und die zumindest eine Steuerung verbindet, um die elektrische Energie von dem Motorgenerator (21) dem Elektromotor (33) des elektrisch unterstützten Turboladers (31) zuzuführen,
**dadurch gekennzeichnet, dass** die zumindest eine Steuerung folgende Merkmale umfasst:
eine Motorgeneratorsteuerung (22), die zumindest den Motorgenerator (21) steuert; und eine Steuerung (34) des elektrisch unterstützten Turboladers, die den Elektromotor (33) des elektrisch unterstützten Turboladers (32) steuert und mit dem elektrisch unterstützten Turbolader (31) integriert oder von diesem getrennt ist,
(i) wobei in einer Fahrzeugseitenansicht die Steuerung (34) des elektrisch unterstützten Turboladers in einer Fahrzeug-Vorne-Hinten-Richtung vor einer vorderen Endfläche (11f) des Zylinderbauglieds (11) vorgesehen ist, um in der Fahrzeug-Vorne-Hinten-Richtung zumindest teilweise der vorderen Endfläche (11f) des Zylinderbauglieds (11) zugewandt zu sein, und die Motorgeneratorsteuerung (22) in der Fahrzeug-Vorne-Hinten-Richtung hinter einer hinteren Endfläche (11r) des Zylinderbauglieds (11) vorgesehen ist, um in der Fahrzeug-Vorne-Hinten-Richtung zumindest teilweise der hinteren Endfläche (11r) des Zylinderbauglieds (11) zugewandt zu sein, und
wobei ein Teil (42) des Hochspannungskabelbaums (40) des elektrisch unterstützten Turboladers, der die Steuerung (34) des elektrisch unterstützten Turboladers und die Motorgeneratorsteuerung (22) verbindet, zumindest teilweise in einem Raum vorgesehen ist, der (a) in der Fahrzeug-Oben-Unten-Richtung über einem untersten Ende des Kurbelgehäusebauglieds (12), (b) in der Fahrzeug-Oben-Unten-Richtung unter einem obersten Ende des Zylinderbauglieds (11), (c) in der Fahrzeug-Links-Rechts-Richtung innerhalb der maximalen Breite des Kurbelgehäusebauglieds (12) und (d) in der Fahrzeug-Links-Rechts-Richtung außerhalb des Zylinderbauglieds (11) liegt, oder
(ii) wobei bei Betrachtung in der Zylinderaxialrichtung der elektrisch unterstützte Turbolader (31) in der Fahrzeug-Vorne-Hinten-Richtung vor der vorderen Endfläche (11f) des Zylinderbauglieds (11) vorgesehen ist, um in der Fahrzeug-Vorne-Hinten-Richtung zumindest teilweise der vorderen Endfläche (11f) des Zylinderbauglieds (11) zugewandt zu sein, und die Steuerung (34) des elektrisch unterstützten Turboladers in der Fahrzeug-Vorne-Hinten-Richtung hinter der hinteren Endfläche (11r) des Zylinderbauglieds (11) vorgesehen ist, um in der Fahrzeug-Vorne-Hinten-Richtung zumindest teilweise der hinteren Endfläche (11r) des Zylinderbauglieds (11) zugewandt zu sein, und
wobei ein Teil (41) des Hochspannungskabelbaums (40) des elektrisch unterstützten Turboladers, der den elektrisch unterstützten Turbolader (31) und die Steuerung (34) des elektrisch unterstützten Turboladers verbindet, zumindest teilweise in einem Raum vorgesehen ist, der (a) in der Fahrzeug-Oben-Unten-Richtung über dem untersten Ende des Kurbelgehäusebauglieds (12), (b) in der Fahrzeug-Oben-Unten-Richtung unter dem obersten Ende des Zylinderbauglieds (11), (c) in der Fahrzeug-Links-Rechts-Richtung innerhalb der maximalen Breite des Kurbelgehäusebauglieds (12) und (d) in der Fahrzeug-Links-Rechts-Richtung außerhalb des Zylinderbauglieds (11) liegt.

2. Das Neigungsfahrzeug (1) gemäß Anspruch 1, bei dem zumindest ein Teil der Motorgeneratorsteuerung (22) in der Fahrzeug-Vorne-Hinten-Richtung hinter dem oder an der gleichen Position wie der Motorgenerator (21) vorgesehen ist.

3. Das Neigungsfahrzeug (1) gemäß Anspruch 1 oder 2, bei dem ein oberer Abschnitt in der Fahrzeug-Oben-Unten-Richtung von zumindest einer Zylinderaxialinie (Cy) des Zylinderbauglieds (11) vor einem unteren Abschnitt in der Fahrzeug-Vorne-Hinten-Richtung liegt.

4. Das Neigungsfahrzeug (1) gemäß einem der Ansprüche 1 bis 3, bei dem
der elektrisch unterstützte Turbolader (31) und die Steuerung (34) des elektrisch unterstützten Turboladers voneinander getrennt sind,
die Steuerung (34) des elektrisch unterstützten Turboladers und die Motorgeneratorsteuerung (22) integriert sind,
bei Betrachtung in der Zylinderaxialrichtung der elektrisch unterstützte Turbolader (31) in der Fahrzeug-Vorne-Hinten-Richtung vor dem Zylinderbauglied (11) vorgesehen ist, und die Steuerung (34) des elektrisch unterstützten Turboladers, die mit der Motorgeneratorsteuerung (22) integriert ist, in der Fahrzeug-Vorne-Hinten-Richtung hinter dem Zylinderbauglied (11) vorgesehen ist, und
der Teil des Hochspannungskabelbaums (40) des elektrisch unterstützten Turboladers, der den elektrisch unterstützten Turbolader (31) und die Steuerung (34) des elektrisch unterstützten Turboladers verbindet, zumindest teilweise in dem Raum vorgesehen ist, der (a) in der Fahrzeug-Oben-Unten-Richtung über dem untersten Ende des Kurbelgehäusebauglieds (12), (b) in der Fahrzeug-Oben-Unten-Richtung unter dem obersten Ende des Zylinderbauglieds (11), (c) in der Fahrzeug-Links-Rechts-Richtung innerhalb der maximalen Breite des Kurbelgehäusebauglieds (12) und (d) in der Fahrzeug-Links-Rechts-Richtung außerhalb des Zylinderbauglieds (11) liegt.

## Revendications

1. Véhicule inclinable (1) sur lequel est monté un turbocompresseur à assistance électrique (31), comprenant :
un châssis de véhicule (2) qui s'incline vers la droite du véhicule lors d'un virage à droite et vers la gauche du véhicule lors d'un virage à gauche ;
un moteur (10) comprenant un élément cylindrique (11) formant au moins un trou cylindrique et un élément de carter (12) logeant un vilebrequin (16) tournant autour d'un axe s'étendant dans un sens gauche-droite du véhicule, l'élément cylindrique (11) étant prévu de telle sorte qu'au moins une ligne axiale de cylindre (Cy), qui est une ligne axiale centrale dudit au moins un trou cylindrique, soit parallèle à la direction verticale du véhicule ou croise la direction haut-bas du véhicule ;
un générateur à moteur (21) qui est configuré pour générer de l'énergie électrique grâce à la force de rotation du vilebrequin (16) ;
un turbocompresseur à assistance électrique (31) qui comprend un turbocompresseur (32) et un moteur électrique (33), le turbocompresseur (32) étant configuré pour comprimer l'air d'admission fourni au moteur (10) par un compresseur (32c) prévu sur le même arbre rotatif (32b) qu'une turbine (32a) entraînée par les gaz d'échappement évacués du moteur (10), et le moteur électrique (33) étant configuré pour faire tourner l'arbre rotatif (32b) du turbocompresseur (32) en utilisant l'énergie électrique générée par le générateur à moteur (21) ;
au moins un contrôleur qui est configuré pour commander le générateur à moteur (21) et le moteur électrique (33) faisant tourner l'arbre rotatif (32b) du turbocompresseur à assistance électrique (31) ; et
un faisceau haute tension (40) pour turbocompresseur à assistance électrique qui relie le générateur à moteur (21), le moteur électrique (33) du turbocompresseur à assistance électrique (31) et au moins un contrôleur afin de fournir l'énergie électrique du générateur à moteur (21) au moteur électrique (33) du turbocompresseur à assistance électrique (31),
**caractérisé en ce que** l'au moins un contrôleur comprend :
un contrôleur de générateur à moteur (22) contrôlant au moins le générateur à moteur (21) ; et un contrôleur de turbocompresseur à assistance électrique (34) contrôlant le moteur électrique (33) du turbocompresseur à assistance électrique (32) et étant intégré au turbocompresseur à assistance électrique (31) ou séparé de celui-ci,
(i) dans une vue latérale du véhicule, le contrôleur de turbocompresseur à assistance électrique (34) étant prévu à l'avant d'une face d'extrémité avant (11f) de l'élément cylindrique (11) dans une direction avant-arrière du véhicule de manière à faire face au moins partiellement à la face d'extrémité avant (11f) de l'élément cylindrique (11) dans la direction avant-arrière du véhicule, et le contrôleur du générateur à moteur (22) étant prévu à l'arrière d'une face d'extrémité arrière (11r) de l'élément cylindrique (11) dans la direction avant-arrière du véhicule de manière à faire face au moins partiellement à la face d'extrémité arrière (11r) de l'élément cylindrique (11) dans la direction avant-arrière du véhicule, et
une partie (42) du faisceau haute tension (40) du turbocompresseur à assistance électrique, qui relie le contrôleur (34) du turbocompresseur à assistance électrique et le contrôleur (22) du générateur à moteur, étant au moins partiellement prévue dans un espace qui est (a) au-dessus d'une extrémité inférieure de l'élément de carter (12) dans la direction verticale du véhicule, (b) en dessous d'une extrémité supérieure de l'élément cylindrique (11) dans le sens vertical du véhicule, (c) à l'intérieur de la largeur maximale de l'élément de carter (12) dans le sens horizontal du véhicule, et (d) à l'extérieur de l'élément cylindrique (11) dans le sens horizontal du véhicule, ou
(ii) lorsqu'on regarde dans la direction axiale du cylindre, le turbocompresseur à assistance électrique (31) étant prévu à l'avant de la face d'extrémité avant (11f) de l'élément cylindrique (11) dans la direction avant-arrière du véhicule de manière à faire face au moins partiellement à la face d'extrémité avant (11f) de l'élément cylindrique (11) dans la direction avant-arrière du véhicule, et le contrôleur de turbocompresseur à assistance électrique (34) étant prévu en arrière de la face d'extrémité arrière (11r) de l'élément cylindrique (11) dans la direction avant-arrière du véhicule de manière à faire face au moins partiellement à la face d'extrémité arrière (11r) de l'élément cylindrique (11) dans la direction avant-arrière du véhicule, et
une partie (41) du faisceau haute tension (40) du turbocompresseur à assistance électrique, qui relie le turbocompresseur à assistance électrique (31) et le contrôleur du turbocompresseur à assistance électrique (34), étant au moins partiellement prévue dans un espace qui est (a) au-dessus de l'extrémité inférieure de l'élément de carter (12) dans la direction verticale du véhicule, (b) en dessous de l'extrémité supérieure de l'élément cylindrique (11) dans le sens vertical du véhicule, (c) à l'intérieur de la largeur maximale de l'élément de carter (12) dans le sens horizontal du véhicule, et (d) à l'extérieur de l'élément cylindrique (11) dans le sens horizontal du véhicule.

2. Véhicule inclinable (1) selon la revendication 1, dans lequel au moins une partie du contrôleur de générateur à moteur (22) est prévue à l'arrière ou à la même position que le générateur à moteur (21) dans la direction avant-arrière du véhicule.

3. Véhicule inclinable (1) selon la revendication 1 ou 2, dans lequel une partie supérieure, dans la direction verticale du véhicule, d'au moins une ligne axiale de cylindre (Cy) de l'élément de cylindre (11) est située à l'avant d'une partie inférieure, dans le sens avant-arrière du véhicule.

4. Véhicule (1) selon l'une quelconque des revendications 1 à 3, dans lequel,
le turbocompresseur à assistance électrique (31) et le contrôleur de turbocompresseur à assistance électrique (34) sont séparés l'un de l'autre,
le contrôleur du turbocompresseur à assistance électrique (34) et le contrôleur du générateur à moteur (22) sont intégrés,
lorsque vu dans la direction axiale du cylindre, le turbocompresseur à assistance électrique (31) est situé à l'avant de l'élément cylindrique (11) dans le sens avant-arrière du véhicule, et le contrôleur du turbocompresseur à assistance électrique (34) intégré au contrôleur du générateur à moteur (22) est situé à l'arrière de l'élément cylindrique (11) dans le sens avant-arrière du véhicule, et
la partie du faisceau haute tension (40) du turbocompresseur à assistance électrique, qui relie le turbocompresseur à assistance électrique (31) et le contrôleur du turbocompresseur à assistance électrique (34), est au moins partiellement prévue dans l'espace qui est (a) au-dessus de l'extrémité inférieure de l'élément de carter (12) dans la direction verticale du véhicule, (b) en dessous de l'extrémité supérieure de l'élément cylindrique (11) dans le sens vertical du véhicule, (c) à l'intérieur de la largeur maximale de l'élément de carter (12) dans le sens horizontal du véhicule, et (d) à l'extérieur de l'élément v(11) dans le sens horizontal du véhicule.
